# EUROPEAN PATENT SPECIFICATION

(11) **EP 2 128 017 B1**
(45) Date of publication and mention of the grant of the patent: **24.07.2013**
(21) Application number: 07704782.7
(22) Date of filing: 30.01.2007
(51) Int. Cl.: B64C 1/00, B29C 70/44, B29C 33/44, B29C 70/54, B64C 1/06

(54) **STRUCTURE OF COMPOSITE MATERIAL FOR AIRCRAFT FUSELAGES AND METHOD FOR MANUFACTURE THEREOF**
STRUKTUR AUS VERBUNDMATERIAL FÜR FLUGZEUGRÜMPFE UND HERSTELLUNGSVERFAHREN DAFÜR
STRUCTURE DE MATIERE COMPOSEE POUR LE FUSELAGE D'UN AERONEF ET SON PROCEDE DE FABRICATION

(43) Date of publication of application: 02.12.2009
(73) Proprietor: Airbus Operations S.L., 28906 Madrid (ES)
(72) Inventor: MARTÍNEZ CEREZO, Alberto, Ramón, E-28906 Getafe, Madrid (ES); MIGUEZ CHARINES, Yolanda, E-28906 Getafe, Madrid (ES); JORDÁN CARNICERO, Javier, E-28906 Getafe, Madrid (ES); SÁNCHEZ FERNÁNDEZ, Julián, E-28906 Getafe, Madrid (ES)
(74) Representative: Elzaburu Marquez, Alberto
(86) International application number: PCT/ES2007/070022
(87) International publication number: WO 2008/092971

(56) References cited:
- WO-A1-2005/105402
- ES-A1- 2 263 324
- US-A- 4 822 272
- US-A- 5 223 067
- US-A1- 2004 070 108
- US-A1- 2006 108 058
- US-B1- 6 613 258

## Description

### FIELD OF THE INVENTION

The present invention relates to a single piece, closed composite material structure for aircraft fuselage and to the process for manufacturing such a structure according to the independent claims 1 and 8.

### BACKGROUND OF THE INVENTION

The structures used in aeronautic fuselages comprise an outer panel, stiffeners and/or inner stringers. Since weight is a fundamental aspect in the aeronautic industry, the structures used in optimized aeronautic fuselages are manufactured in composite materials, these composite material structures thus prevailing over the more traditional metallic structures.

In the process for optimizing this type of structures, maximal weight reduction and the integration of a larger number of individual parts into larger parts are sought so as to reduce both the duration of the manufacturing process and the handling and assembly of smaller elements.

The application of the previous aspects to aeronautic fuselages leads to integrating the outer panels with their stiffeners in the smallest possible number of operations. Examples of this are found in documents EP 1151856, where the previously cured panels are assembled on each of the outer panels, and US 5242523, where the crossed framework of composite material stiffeners is assembled in several operations on the outer panels forming the structure. In these cases, the panels together with their stiffeners are manufactured in several successive operations, the addition of parts to subsequently join these panels to one another with joints ensuring the tightness between panels further being necessary.

US 2004/0070108 represents the closest prior art to the subject-matter of independent claims 1 and 8.

The object of the present invention is a composite material structure for aircraft fuselage solving the drawbacks of the prior art, as well as a process for manufacturing such a structure.

### SUMMARY OF THE INVENTION

The present invention therefore provides a closed composite material structure for aircraft fuselage formed on a male jig from which it can be separated in a certain direction, said structure comprising a single outer panel and a plurality of inner longitudinal stiffeners integrated in said panel, such that the expansion coefficient of the male jig is greater than the expansion coefficient of the composite material of the structure, thus being able to remove the already manufactured structure, formed by the panel and the integrated inner stiffeners, in a single operation.

The male jig comprises a leak-tight tubular element on which a plurality of detachable elements are placed.

The present invention further proposes a process for manufacturing such a closed structure comprising the following steps:
a) arranging the stiffeners on the male jig;
b) laminating the composite material on the surface formed by the male jig and the stiffeners to form the outer panel;
c) placing a hold-down plate on the outer surface of the laminated composite material;
d) placing the necessary remaining auxiliary elements for the autoclave curing of the composite materials used;
e) curing the closed structure in high temperature and pressure conditions inside an autoclave;
f) separating the closed structure from the male jig according to the suitable direction of, and parallel to, the longitudinal separation direction.

Other features and advantages of the present invention will emerge from the following detailed description of an illustrative embodiment of its object in relation to the attached figures.

### DESCRIPTION OF THE DRAWINGS

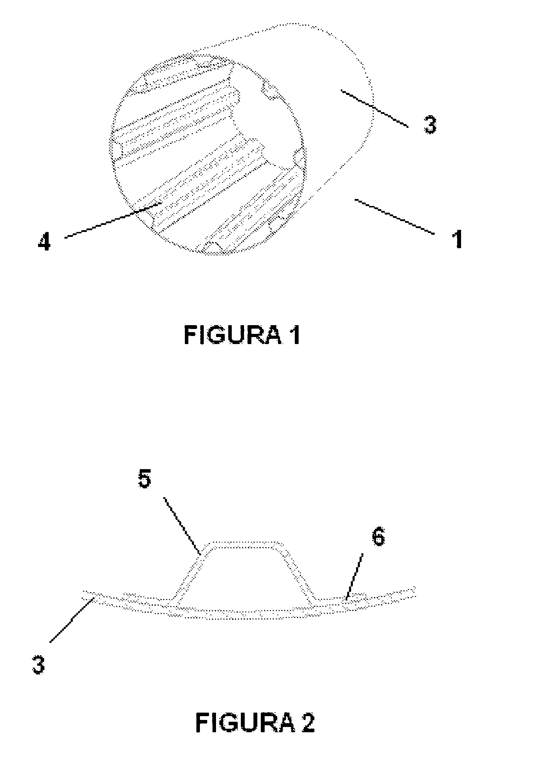

Figure 1 shows a perspective view of a closed composite material structure for aircraft fuselage according to the present invention.
Figure 2 shows a detailed sectioned view of the panel and of a stiffener of a closed composite material structure according to the present invention.

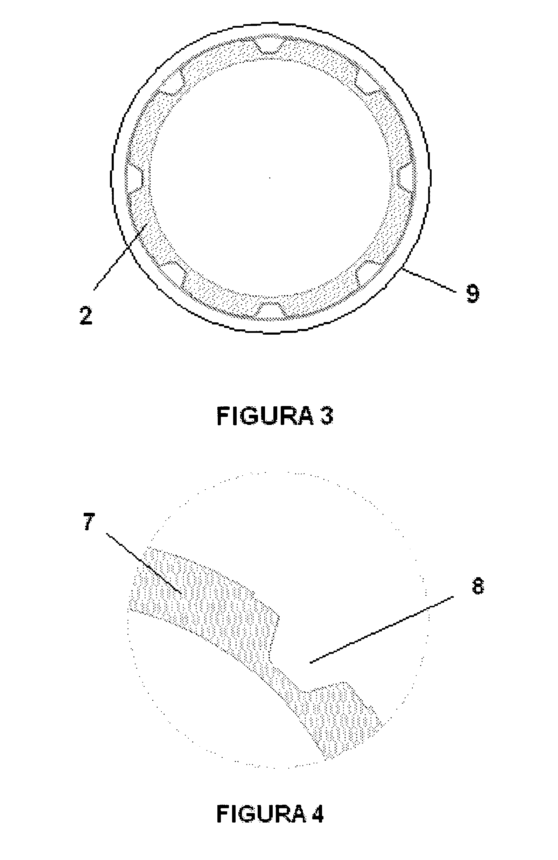

Figure 3 shows a cross-section of a closed composite material structure arranged on a male jig, according to the present invention.
Figure 4 shows a detailed sectioned view of the male jig shaping the closed composite material structure according to the present invention.
Figure 5 shows a sectioned view of the process for manufacturing a closed composite material structure according to the present invention.
Figure 6 shows a cross-section of a closed composite material structure arranged on a male jig, according to the present invention, after the curing process.
Figure 7 shows a detailed sectioned view of the male jig shaping the closed composite material structure according to the present invention, after the curing process.
Figure 8 shows a view of the removal of the male jig from the closed composite material structure according to the present invention.
Figure 9 shows a view of an implementation of the male jig according to a first embodiment of the invention.

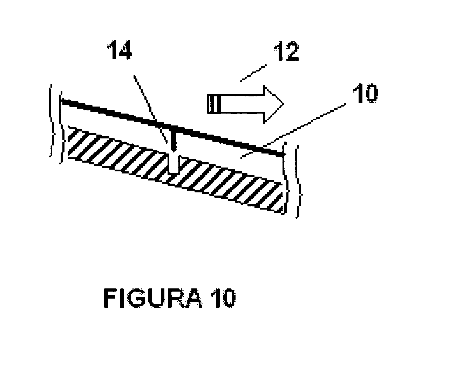

Figure 10 shows a view of an implementation of the male jig according to a second embodiment of the invention.

### DETAILED DESCRIPTION OF THE INVENTION

The present invention proposes a closed structure 1 for aircraft fuselage manufactured in composite material comprising an outer panel 3 and a plurality of inner longitudinal stiffeners 4 integrated on said panel 3. These stiffeners 4 have a honeycomb shape, preferably an omega (Ω) shape, each of which comprises in turn webs 5, which are parts of the stiffener 4 separated from the panel 3, and legs 6, which are the parts of the stiffener 4 joined to the panel 3.

The closed structure 1 will preferably have a cylindrical or frustoconical shape.

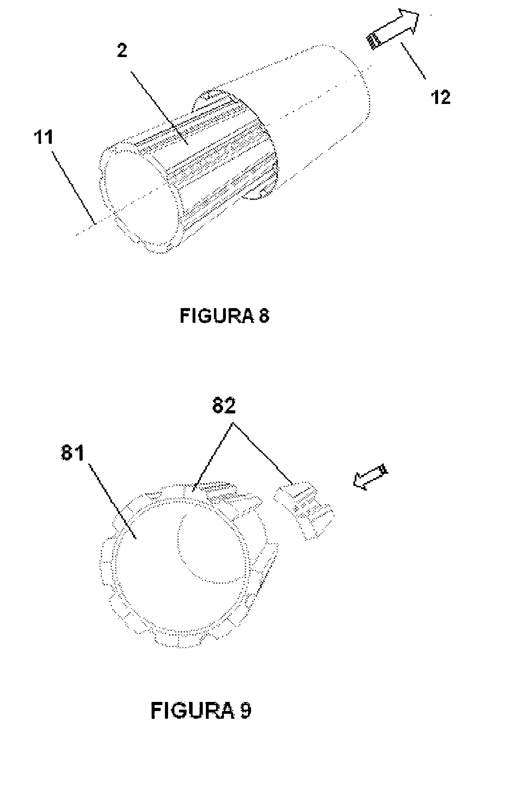

Figure 9 shows the male jig according to the invention that comprises a leak-tight element (81) on which a plurality of detachable elements (32) are placed.

The closed composite material structure 1 is shaped on a leak-tight male jig 2 in turn comprising a body 7 and slots 8, such that the material of the male jig 2 has a thermal expansion coefficient that is greater than that of the composite material forming the structure 1.

The outer surface of the male jig 2 has a shape similar to the inner surface of the closed structure 1, such that the slots 8 of the male jig 2 house the webs 5 of the stiffeners 4.

The closed structure 1 must have a shape allowing its separation from the male jig 2 in a certain direction 11, and in direction 12.

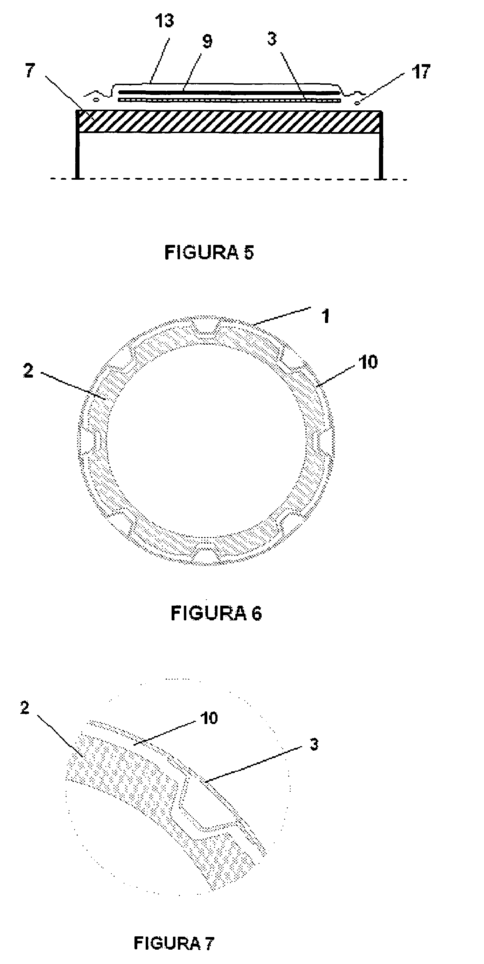

After the curing process, a clearance 10 occurs which allows removing the shaped structure 1 from the male jig 2, in direction 11 and in direction 12. The clearance 10 which occurs after the curing process can be observed in Figure 7, the size of the structure 1 remaining greater than the size of the male jig 2 after the curing process (see Figure 6).

The present invention further proposes a process for manufacturing a closed composite material structure 1 comprising the following steps:
a) sequentially arranging the stiffeners 4 on the slots 8 of the male jig 2, such that the webs 5 of the stiffeners 4 are in the slots 8 and the legs 6 are supported on the outer surface of the male jig 2;
b) laminating the composite material on the surface formed by the male jig 2 and the stiffeners 4, to form the outer panel 3 of the closed structure 1;
c) placing a hold-down plate 9 on the outer surface of the outer panel 3 to provide surface quality to said surface;
d) placing the necessary remaining auxiliary elements 13 for the autoclave curing of the composite materials used, there being gaskets 17 between them;
e) curing the closed structure 1 inside the autoclave in high pressure and temperature conditions, this process including in turn the following steps:
   i. temperature increase of the assembly formed by the male jig 2 and the composite material of the closed structure 1;
   ii. expansion of the male jig 2 and of the composite material of the closed structure 1;
   iii. polymerization of the composite material of the closed structure 1 due to the effect of pressure and temperature;
   iv. cooling of the assembly formed by the closed structure 1 and the male jig 2 once the polymerization has concluded, such that the closed structure 1 reaches it definitive geometry and the male jig 2 recovers its initial geometry;
f) separating the closed structure 1 from the male jig 2 according to the suitable direction 12 of and parallel to the longitudinal separation direction 11.

A closed structure 1, the geometry of which is greater than the initial geometry and having a clearance 10 with respect to the taping and curing male jig 2, is obtained after this process.

The closed structure 1 is separated from the male jig 2 in a manner parallel to the longitudinal separation direction 11, and in direction 12, according to its geometric features and aided by the clearance 10 generated in the curing process.

The design of the stiffeners 4, the skin 3 and the jig 2 will be such that there are no mechanical interferences during the demolding process, further considering the clearances 10 generated in the process. In the event of interferences occurring in the design process, if said interference is less than the local clearance 10 generated in the process for curing the closed structure 1, said closed structure 1 can also be demolded.

According to another preferred embodiment of the invention, at least one inner element 14 inside the outer panel 3 can be introduced in the closed structure 1, which element is not designed according to the longitudinal separation direction 11. The removal of the closed structure 1 according to the longitudinal separation direction 11 is then achieved if the size of this inner element 14 is smaller than the clearance 10 generated in the curing process.

The hold-down plates 9 provide the closed structure 1 with the required surface quality.

According to another variant of the invention, the male jig 2 can be formed by a leak-tight tubular element 81 on which a series of detachable elements 82 completely or partially shaping the inner surface of the closed structure 1 are placed.

Those modifications comprised within the scope defined by the following claims can be introduced in the preferred embodiments which have just been described.

## Claims

1. A closed composite material structure (1) for aircraft fuselage shaped on a male jig (2), said structure (1) comprising an outer panel (3) and a plurality of longitudinal stiffeners (4) inside said outer panel (3), the expansion coefficient of the male jig (2) being greater than the expansion coefficient of the composite material of the structure (1), a clearance (10) which allows separating the structure (1) from the male jig (2) being generated between the outer panel (3) and the male jig (2) in the process for curing the composite material of the structure (1), **characterized in that** the male jig (2) comprises a leak-tight tubular element (81) on which a plurality of detachable elements (82) are placed.

2. A closed structure (3) according to claim 1, **characterized in that** the outer panel (3) comprises in its inner surface at least one element (14) with a size smaller than the clearance (10) generated in the process for curing the composite material of the structure (1).

3. A closed structure (3) according to any of the previous claims, **characterized in that** the stiffeners (4) comprise webs (5) separated from the panel (3) and legs (6) joined to the panel (3).

4. A closed structure (3) according to any of the previous claims, **characterized in that** the stiffeners (4) have a honeycomb shape.

5. A closed structure (3) according to any of the previous claims, **characterized in that** the stiffeners (4) have an omega (Q) shape.

6. A closed structure (3) according to any of the previous claims, **characterized in that** the structure (1) has a shape such as a cylindrical shape.

7. A closed structure (3) according to any of the previous claims, **characterized in that** the structure (1) has a shape such as a frustoconical shape.

8. A process for manufacturing a closed composite material structure (1) for aircraft fuselage comprising the following steps:
a) sequentially arranging the stiffeners (4) on the male jig (2) ;
b) laminating the composite material on the surface formed by the male jig (2) and the stiffeners (4) to form the outer panel (3) of the closed structure 1;
c) placing a hold-down plate (9) on the outer surface of the outer panel (3);
d) placing the necessary remaining auxiliary elements (13) for the autoclave curing of the composite materials used;
e) curing the closed structure (1) inside the autoclave in high pressure and temperature conditions;
f) separating the closed structure (1) from the male jig (2) according to a suitable direction (12) of, and parallel to, the longitudinal separation direction (11).

## Patentansprüche

1. Geschlossene Verbundmaterialstruktur (1) für Flugzeugrümpfe, die auf einem männlichen Montagegestell (2) geformt wird, wobei die Struktur (1) eine Außenhaut (3) und mehrere längsgerichtete Versteifungselemente (4) in der Außenhaut (3) aufweist, wobei der Ausdehnungskoeffizient des männlichen Montagegestells (2) größer als der Ausdehnungskoeffizient des Verbundmaterials der Struktur (1) ist, wobei ein Zwischenraum (10), welcher das Trennen der Struktur (1) von dem männlichen Montagegestell (2) ermöglicht, zwischen der Außenhaut (3) und dem männlichen Montagegestell (2) während des Vorgangs des Aushärtens des Verbundmaterials der Struktur (1) erzeugt wird, **dadurch gekennzeichnet, dass** das männliche Montagegestell (2) ein leckdichtes rohrförmiges Element (81) aufweist, auf welchem mehrere lösbare Elemente (82) angeordnet sind.

2. Geschlossene Struktur (1) nach Anspruch 1, **dadurch gekennzeichnet, dass** die Außenhaut (3) in ihrer Innenseite mindestens ein Element (14) mit einer Größe aufweist, die kleiner als der während des Vorgangs des Aushärtens des Verbundmaterials der Struktur (1) erzeugte Zwischenraum (10) ist.

3. Geschlossene Struktur (1) nach einem der vorhergehenden Ansprüche, **dadurch gekennzeichnet, dass** die Versteifungselemente (4) von der Haut (3) beabstandete Stege (5) und mit der Haut (3) verbundene Schenkel (6) aufweisen.

4. Geschlossene Struktur (1) nach einem der vorhergehenden Ansprüche, **dadurch gekennzeichnet, dass** die Versteifungselemente (4) wabenförmig sind.

5. Geschlossene Struktur (1) nach einem der vorhergehenden Ansprüche, **dadurch gekennzeichnet, dass** die Versteifungselemente (4) die Form eines Omega (Ω) aufweisen.

6. Geschlossene Struktur (1) nach einem der vorhergehenden Ansprüche, **dadurch gekennzeichnet, dass** die Struktur (1) eine beispielsweise zylindrische Form aufweist.

7. Geschlossene Struktur (1) nach einem der vorhergehenden Ansprüche, **dadurch gekennzeichnet, dass** die Struktur (1) eine beispielsweise kegelstumpfförmige Form aufweist.

8. Verfahren zur Herstellung einer geschlossenen Verbundmaterialstruktur (1) für Flugzeugrümpfe mit den folgenden Schritten:
a) sequentielles Anordnen der Versteifungselemente (4) an dem männlichen Montagegestell (2);
b) Laminieren des Verbundmaterials auf die durch das männliche Montagegestell (2) und die Versteifungselemente (4) gebildete Fläche zur Bildung der Außenhaut (3) der geschlossenen Struktur (1);
c) Platzieren einer Niederhalteplatte (9) auf der Außenfläche der Außenhaut (3);
d) Platzieren der erforderlichen restlichen Hilfselemente (13) für das Autoklavieren des verwendeten Verbundmaterials;
e) Aushärten der geschlossenen Struktur (1) im Autoklaven unter Hochtemperatur- und Hochdruckbedingungen;
f) Trennen der geschlossenen Struktur (1) von dem männlichen Montagegestell (2) in einer geeigneten Richtung (12) der und parallel zu der längsgerichteten Trennrichtung (11).

## Revendications

1. Structure fermée en matériau composite (1) pour fuselage d'aéronef mise en forme sur un gabarit de montage mâle (2), ladite structure (1) comprenant un panneau extérieur (3) et une pluralité de raidisseurs longitudinaux (4) à l'intérieur dudit panneau extérieur (3), le coefficient de dilatation du gabarit mâle (2) étant supérieur au coefficient de dilatation du matériau composite de la structure (1), un espace (10) qui permet la séparation de la structure (1) d'avec le gabarit mâle (2) étant généré entre le panneau extérieur (3) et le gabarit mâle (2) dans le processus de durcissement du matériau composite de la structure (1), **caractérisée en ce que** le gabarit mâle (2) comprend un élément tubulaire étanche (81) sur lequel sont placés une pluralité d'éléments détachables (82).

2. Structure fermée (3) selon la revendication 1, **caractérisée en ce que** le panneau extérieur (3) comprend dans sa surface intérieure au moins un élément (14) ayant une taille inférieure à l'espace (10) généré dans le processus de durcissement du matériau composite de la structure (1).

3. Structure fermée (3) selon l'une quelconque des revendications précédentes, **caractérisée en ce que** les raidisseurs (4) comprennent des âmes (5) séparées du panneau (3) et des jambes (6) reliées au panneau (3).

4. Structure fermée (3) selon l'une quelconque des revendications précédentes, **caractérisée en ce que** les raidisseurs (4) ont une forme de nid d'abeilles.

5. Structure fermée (3) selon l'une quelconque des revendications précédentes, **caractérisée en ce que** les raidisseurs (4) ont une forme d'oméga (Ω).

6. Structure fermée (3) selon l'une quelconque des revendications précédentes, **caractérisée en ce que** la structure (1) a une forme telle qu'une forme cylindrique.

7. Structure fermée (3) selon l'une quelconque des revendications précédentes, **caractérisée en ce que** la structure (1) a une forme telle qu'une forme tronconique.

8. Procédé de fabrication d'une structure fermée en matériau composite (1) pour fuselage d'aéronef comprenant les étapes suivantes :
a) disposer les raidisseurs (4) les uns à la suite des autres sur le gabarit mâle (2) ;
b) déposer le matériau composite sur la surface formée par le gabarit mâle (2) et les raidisseurs (4) pour former le panneau extérieur (3) de la structure fermée (1) ;
c) placer une plaque de maintien (9) sur la surface extérieure du panneau extérieur (3) ;
d) placer les éléments auxiliaires nécessaires restants (13) pour le durcissement en autoclave des matériaux composites utilisés ;
e) réaliser le durcissement de la structure fermée (1) à l'intérieur de l'autoclave dans des conditions de pression et de température élevées ;
f) séparer la structure fermée (1) du gabarit mâle (2) selon une direction appropriée (12) distincte et parallèle à la direction de séparation longitudinale (11).
